# DEMANDE DE BREVET EUROPEEN

(11) **EP 0 607 073 A1**
(43) Date de publication de la demande: **20.07.1994**
(21) Numéro de dépôt: 94400050.4
(22) Date de dépôt: 10.01.1994
(51) Int. Cl.: C04B 28/02

(54) **Compositions pour ciment et ciments obtenus à partir de ces compositions**

(30) Priorité: 13.01.1993 FR 9300229
(71) Demandeur: RHONE-POULENC CHIMIE, 92408 Courbevoie Cédex (FR)
(72) Inventeur: Bortzmeyer, Denis, F-94300 Vincennes (FR); Frouin, Laurent, F-94240 l'Hay Les Roses (FR)
(74) Mandataire: Dubruc, Philippe

(57) **Abrégé**

La présente invention concerne des compositions pour ciment sans macro-défauts caractérisées en ce qu'elles comprennent :
- un ciment ;
- un polymère hydrosoluble ou dispersible dans l'eau ;
- au moins un élément choisi dans le groupe comprenant les silices fabriquées par voie humide, les silices de pyrogénation et les silicones.

## Description

La présente invention concerne des compositions pour ciments sans macro-défauts et les ciments obtenus à partir de ces compositions.

Les ciments sans macro-défauts, appelés MDF (Macro Defect Free), sont apparus il y a une dizaine d'années. Ces produits sont obtenus par mélange de ciment, d'eau et de polymères. Ils possèdent des propriétés mécaniques très nettement améliorées par rapport aux ciments classiques, notamment en ce qui concerne la résistance à la flexion. Toutefois, les ciments MDF présentent un inconvénient majeur qui est leur grande sensibilité à l'eau. Leur résistance en présence d'eau diminue sensiblement au cours du temps. Ainsi, les ciments MDF à base de Portland peuvent perdre au moins 50 % de leur résistance à la traction après des cycles d'immersion dans l'eau et de séchage.

L'objet de la présente invention est de fournir un matériau du type MDF à résistance à l'eau améliorée.

Dans ce but, les compositions pour ciment sans macro-défauts selon l'invention sont caractérisées en ce qu'elles comprennent :
- un ciment ;
- un polymère hydrosoluble ou dispersible dans l'eau ;
- au moins un élément choisi dans le groupe comprenant les silices fabriquées par voie humide, les silices de pyrogénation et les silicones.

Par ailleurs, l'invention concerne aussi un procédé de préparation d'un ciment sans macro-défauts qui est caractérisé en ce qu'il comprend une étape dans laquelle on mélange avec de l'eau un ciment, un polymère hydrosoluble ou dispersible dans l'eau, au moins un élément choisi dans le groupe comprenant les silices fabriquées par voie humide, les silices de pyrogénation et les silicones.

L'invention couvre aussi un procédé de préparation d'un ciment sans macro-défauts qui est caractérisé en ce qu'il comprend une étape dans laquelle on mélange une composition du type précédent.

D'autres caractéristiques, détails et avantages de l'invention apparaîtront plus clairement à la lecture de la description qui va suivre et des exemples donnés à titre non limitatif.

Les compositions et les procédés selon l'invention comportent ou mettent en oeuvre, comme on l'a vu plus haut, un certain nombre d'éléments qui vont maintenant être étudiés plus précisément. Pour tout le reste de la description, tout ce qui est décrit au sujet desdits éléments s'applique tant aux compositions qu'aux procédés qui utilisent ces éléments.

Ces compositions comprennent tout d'abord un ciment. Ce ciment est du type hydraulique, c'est-à-dire qu'il s'agit d'un matériau qui peut durcir en présence d'eau. Bien que tout type de ciment puisse être utilisé dans le cadre de la présente invention, quelques exemples vont être donnés ci-après.

Ce ciment peut tout d'abord être du type aluminate. On entend par là tout ciment contenant une proportion élevée soit d'alumine en tant que telle soit d'aluminate soit des deux. On peut citer à titre d'exemple les ciments à base d'aluminate de calcium, notamment ceux du type SECAR.

Le ciment peut aussi être du type silicate et plus particulièrement à base de silicate de calcium. On peut donner à titre d'exemple les ciments PORTLAND et dans ce type de ciments les Portland à prise rapide ou très rapide, les ciments blancs, ceux résistant aux sulfates ainsi que ceux comprenant des laitiers de hauts-fourneaux et/ou des cendres volantes et/ou du méta-kaolin.

On peut aussi mentionner les ciments à base d'hémihydrate de sulfate de calcium ainsi que les ciments magnésiens dits ciments de Sorel.

Les compositions de l'invention peuvent comprendre un mélange de ciments notamment du type de ceux décrits ci-dessus. Toutefois, selon un mode de réalisation préférentiel de l'invention, on utilise les ciments du type silicate notamment Portland.

Le second élément constitutif des compositions de l'invention est le polymère hydrosoluble ou dispersible dans l'eau. Il s'agit là de tout polymère ou copolymère organique du type décrit dans l'art antérieur au sujet des ciments MDF. Les polymères qui conviennent sont donc bien connus. On pourra notamment se référer au brevet US 4410366 ou à la demande de brevet européen 220073 dont les enseignements respectifs à ce sujet sont incorporés ici.

On pourra mentionner ici à titre d'exemples de polymères convenables les dérivés de la cellulose tels que les éthers de cellulose ou de carboxycellulose, les polysaccharides tels que guar et gommes xanthanes, les polyacrylamides, les polyesters, les polymères acryliques, les polymères maléiques, les acétates de polyvinyle partiellement hydrolysés, l'alcool polyvinylique, l'oxyde de polyéthylène, le polyvinyl pyrrolidone, les résines urée, époxy ou phénolformaldéhyde.

Plus particulièrement et dans le cas de l'utilisation d'un ciment PORTLAND notamment, on préfère utiliser les polymères comprenant au moins des fonctions carboxyles ou des groupements susceptibles de donner des fonctions carboxyles, ces polymères étant capable d'interagir avec des anions ou des cations libérés lors de l'hydratation du ciment. Des exemples de tels polymères sont les polyacrylamides ou des copolymères acétate de polyvinyle partiellement hydrolisé-acide acrylique.

La teneur en polymère est généralement d'au moins 2 % en poids par rapport au ciment, de préférence au moins 5 % et plus particulièrement elle peut être comprise entre 5 et 9 %. Habituellement, on ne dépasse pas des pourcentages de l'ordre de 15 % car au delà il peut y avoir une perte des propriétés mécaniques du ciment.

Les compositions de l'invention comportent enfin au moins un troisième élément choisi dans le groupe comprenant les silices fabriquées par voie humide, les silices de pyrogénation et les silicones.

Par silices obtenues par voie humide on entend ici les silices obtenues par précipitation à partir de la réaction d'un silicate alcalin avec un acide inorganique et donc les silices précipitées ou les gels de silice suivant le pH du milieu de précipitation, ce pH étant très acide pour les gels ; le mode de préparation de la silice peut ici être quelconque (addition d'acide sur un pied de cuve de silicate, addition simultanée totale ou partielle d'acide et de silicate sur un pied de cuve d'eau ou de solution de silicate, etc...) et est choisi en fonction du type de silice que l'on souhaite obtenir. Entrent aussi dans cette même catégorie les silices hydrothermales obtenues par exemple par réaction d'une silice naturelle avec l'hydroxyde de calcium sous pression dans un autoclave puis traitement avec un acide tel que l'acide chlorydrique.

Les silices de pyrogénation sont celles obtenues par hydrolyse du tétrachlorure de silicium dans la flamme. On peut citer la silice AEROSIL comme exemple de ce type de produit.

Parmi les silices précitées, on utilise préférentiellement une silice précipitée.

Il est possible d'utiliser des mélanges de silices décrites plus haut.

La silice sera choisie notamment en fonction de sa bonne dispersibilité dans le mélange ciment-polymère.

Il est préférable d'utiliser des silices de surface spécifique BET d'au moins 20 m²/g et plus particulièrement comprise entre 40 et 200 m²/g, par exemple entre 40 et 170 m²/g, dans le cas notamment des silices de précipitation.

Les compositions de l'invention peuvent comporter un silicone.

Les silicones sont des composés comportant des enchaînements polysiloxaniques de type R₃SiO_{0,5} (motif M), R₂SiO (motif D), RSiO_{1,5} (motif T) et SiO₂ (motif Q).

Les radicaux R sont identiques ou différents et peuvent être choisis parmi les radicaux alkyles linéaires ou ramifiés, les radicaux vinyle, phényle, trifluoro-3,3,3 propyle.

De préférence les radicaux alkyles présentent 1 à 6 atomes de carbone. On peut citer plus particulièrement comme radicaux R alkyles, les radicaux méthyle, éthyle, isopropyle, tertiobutyle et n-hexyle.

Dans le cadre de la présente invention, on utilise préférentiellement les huiles ou gommes silicones, c'est-à-dire les produits obtenus par polymérisation anionique ou cationique des cycliques Dₙ en présence de bloqueurs de chaîne M. On peut mentionner les huiles de formule générale MDₙM, les gommes polysiloxanes de masse moléculaire très élevée, de l'ordre par exemple de 500 000 ainsi que les huiles réactives, c'est-à-dire des hauts polymères dihydroxylés de forme HO-Dₙ-OH.

On peut employer en particulier, à titre de silicone, une huile polyméthylsiloxane ramifiée, bloquée en bout de chaîne par des motifs triméthylsiloxy ou une huile polydiméthylsiloxane linéaire, bloquée en bout de chaîne par des motifs triméthylsilyles.

Selon un mode de réalisation préféré, les compositions selon l'invention comprennent au moins une silice du type décrit plus haut, en particulier une silice précipitée, et au moins un silicone.

Il est notamment possible d'utiliser une silice du type de celles décrites ci-dessus, en particulier une silice précipitée, cette silice étant enrobée d'un silicone. Cet enrobage peut être obtenu par pulvérisation d'une huile silicone sur la silice à température ambiante ou à température plus élevée, par exemple vers 500 °C, ce par quoi on fait une chimiesorption du silicone sur la silice.

L'incorporalité des constituants dans le mélange ciment-polymère est généralement meilleure quand un silicone est utilisé.

Les compositions et procédés de l'invention peuvent en outre comprendre ou mettre en oeuvre un certain nombre d'additifs connus.

Comme additif, on peut tout d'abord citer la fumée de silice, généralement condensée.

Selon un mode de réalisation très avantageux, les compositions selon l'invention comprennent ainsi au moins une silice du type décrit plus haut, en particulier une silice précipitée, au moins un silicone et de la fumée de silice.

Comme autre type d'additifs, on peut mentionner les retardeurs de prise. Ceux-ci peuvent être choisis parmi les acides hydroxycarboxyliques contenant du bore, l'acide phosphorique, le phosphate d'aluminium, le sulfate ferreux, le sulfate et le lignosulfate de sodium, le chlorure de zinc, I'acétate de cuivre, le gluconate de sodium, le sulfate acétate de sodium cellulose, le produit de réaction formaldhéhyde-aminolignosulfate, le dialdéhyde amidon, la N,N-diméthyloldihydroxyethylène urée, les silicofluorures, le tall oil et le sucrose.

On peut citer aussi, à titre d'additifs, les fluidifiants comme par exemple le lignosulfonate de sodium et les condensés de naphtalène sulfonate.

L'utilisation et le choix des additifs se feront en fonction des propriétés mécaniques recherchées et de la nature des éléments mis en oeuvre.

Ainsi, dans le cas particulier de compositions ne comportant ou de procédés ne mettant en oeuvre à titre de troisième élément qu'une silice fabriquée par voie humide ou une silice de pyrogénation, il est préférable d'utiliser un retardeur de prise du type décrit plus haut.

Les proportions des différents éléments utilisés dans les compositions ou procédés de l'invention peuvent varier. A titre d'exemple, on peut donner les proportions ci-dessous exprimées en parties en poids :
- ciment : 75 à 100 et plus particulièrement 100 ;
- polymère hydrosoluble ou dispersible dans l'eau : 5 à 11 ;
- silice (du type décrit plus haut) : 1,5 à 20 et plus particulièrement 1,5 à 10 ;
- silicone : 0,1 à 5 et plus particulièrement 0,5 à 2.

En ce qui concerne la silice, la proportion totale de silice en cas d'addition de fumée de silice, donc la proportion de l'ensemble (silice du type décrit plus haut + fumée de silice), peut monter jusqu'à 35, et est généralement supérieure à 5, en particulier à 10.

Les compositions pour ciment sans macro-défauts selon l'invention présentent avantageusement une faible reprise d'eau quand elles sont immergées dans l'eau, par exemple inférieure à 7 %, en particulier d'au plus 5 %, voire d'au plus 3,5 %.

Comme on l'a vu plus haut, l'invention concerne aussi le procédé de préparation d'un ciment sans macro-défauts.

Ce procédé peut être mis en oeuvre selon deux manières.

La première consiste à partir des compositions qui viennent d'être décrites. Dans ce cas, les éléments constitutifs de la composition sont apportés ensemble simultanément.

La seconde consiste à utiliser les éléments décrits plus haut, ceux-ci étant cette fois apportés séparément.

Dans les deux cas, le procédé comprend une étape dans laquelle on mélange tout d'abord les éléments décrits plus haut avec de l'eau.

Le choix entre ces deux manières de procéder pourra se faire en fonction de la présentation des éléments précités. En effet, ces éléments peuvent se présenter soit sous forme solide soit sous forme liquide ou de suspension. Ce peut être le cas pour les polymères qui sont susceptibles de se présenter à l'état sec, solubilisable ou dispersible ou encore sous forme d'une suspension, d'une émulsion ou d'une solution aqueuse. Si l'ensemble des éléments polymère, silice de voie humide, silice de pyrogénation, silicone peuvent se présenter sous une forme n'apportant pas d'eau susceptible d'hydrolyser le ciment, on pourra former une composition du type de celles décrites plus haut et utiliser directement cette composition au moment de la préparation du ciment. Si au contraire, il est nécessaire ou préférable d'utiliser au moins un desdits éléments sous forme liquide avec présence d'eau, on procédera à la préparation du ciment par apport séparé des éléments.

Le mélange avec l'eau se fait dans des conditions cisaillantes, par exemple dans un malaxeur. L'ordre d'introduction des éléments et de l'eau peut être quelconque. La quantité d'eau ajoutée est telle que l'on puisse obtenir une pâte plastique, homogène et malléable. Généralement, la quantité d'eau ajoutée ne dépasse pas 25 % en poids de la quantité de ciment et plus particulièrement 15 % ; elle peut être comprise entre 15 et 9 %.

La pâte obtenue à l'issue du mélange subit ensuite un pressage à chaud. La pression utilisée dépend notamment du type de malaxeur employé et est habituellement comprise entre 10 et 1000 bars, par exemple de l'ordre de 300 bars et la température comprise entre 80 et 150 °C.

Après le pressage à chaud, il est possible de faire subir aussi un ou plusieurs traitements thermiques au produit. Ce type de traitement est connu en soi. Généralement, la température de traitement est comprise entre 60 et 100 °C et on travaille dans une atmosphère humide par exemple à ou aux environ de 95 % d'humidité relative.

On obtient à la fin des opérations décrites ci-dessus un ciment sans macro-défauts et présentant une porosité très faible. Ainsi généralement le ciment obtenu a une porosité d'au plus 0,1 cm³/g et présente des pores de diamètre maximum d'au plus 40 nm et plus particulièrement d'au plus 25 nm.

Ce ciment peut servir dans l'industrie du bâtiment et des travaux publics à la confection d'éléments de construction, qui seront à base dudit ciment.

Des exemples concrets mais non limitatifs vont maintenant être donnés.

Les résultats sont rassemblés dans les tableaux 1 et 2.

### EXEMPLE 1

On prépare un ciment A selon l'invention en utilisant les éléments et les conditions ci-dessous. Les teneurs sont données en parties en poids.
Ciment Portland : 100
Polyacrylamide (ALDRICH, référence 18127-7) : 7
Eau : 14
Silice de précipitation : 5
(taille moyenne 3,2 µm mesurée avant dispersion dans le malaxeur par diffractométrie laser Cilas ; surface spécifique BET 170 m²/g)
Fumée de silice (ELKEM 940 U) : 20
Huile silicone (43V120 RHONE-POULENC, il s'agit d'une huile polyméthylsiloxane ramifiée, bloquée en bout de chaîne par des motifs triméthylsiloxy et dont la viscosité est de l'ordre de 120 mPa.s à 25 °C) : 0,5

Les éléments ci-dessus sont mélangés pendant 15 minutes dans un malaxeur pour élastomère (BRABENDER), puis pressés à 300 bars et 120 °C pendant une heure dans un moule cylindrique de façon à former une plaquette de diamètre 7 cm et d'épaisseur 0,5 cm. Le produit présente une porosité de 0,05 cm³/g et des pores de diamètre maximum égal à 25 nm.

La plaquette ainsi obtenue à partir du ciment A est ensuite découpée en barrettes de dimensions approximatives 5x0,4x0,5 cm³ lesquelles sont ensuite testées en flexion trois points (entraxe 3 cm) 100 jours après leur fabrication. Pour la mesure de la résistance à l'eau, les éprouvettes sont immergées 24 heures dans de l'eau épurée puis testées immédiatement après cette immersion. La reprise d'eau est l'augmentation de poids de la pièce (en % du poids initial) après cette immersion.

### EXEMPLE 2 (Comparatif)

On procède de la même façon que dans l'exemple 1 pour préparer un ciment B comparatif à base du même ciment, du même polyacrylamide et d'eau dans les mêmes proportions que pour le ciment A mais en n'utilisant ni silice précipitée, ni huile silicone, ni fumée de silice. On prépare de la même manière que dans l'exemple 1 des barettes de mêmes dimensions et qui sont soumises au même test.

### EXEMPLE 3 (Comparatif)

On prépare un ciment C de la même manière que dans les exemples précédents et avec les éléments ci-dessous. Les teneurs sont données en parties en poids.
Ciment Portland : 100
Polyacrylamide (ALDRICH, référence 18127-7) : 9,3
Eau : 18,7
Fumée de silice (ELKEM 940 U) : 33,4

On prépare ensuite les mêmes barettes qui sont soumises au même test que précédemment.

### EXEMPLE 4

On prépare un ciment D de la même manière que dans les exemples précédents et avec les éléments ci-dessous. Les teneurs sont données en parties en poids.
Ciment Portland : 7
Polyacrylamide (ALDRICH, référence 18127-7) : 5
Silice de précipitation de l'exemple 1 : 5
Fumée de silice de l'exemple 1 : 20
Retardeur de prise (RETARDAN P) : 0,5
Eau : 14

On prépare ensuite les mêmes barettes qui sont soumises au même test que précédemment.

### EXEMPLE 5

On prépare un ciment E de la même manière que dans les exemples précédents et avec les éléments ci-dessous. Les teneurs sont données en parties en poids.
Ciment Portland : 75,6
Polyacrylamide (ALDRICH, référence 18127-7) : 7,9
Silicone de l'exemple 1 : 1,22
Fumée de silice de l'exemple 1 : 24,4
Eau : 12,8

**TABLEAU 1**

| Ciment | densité | reprise d'eau (%) | résistance après 24h dans l'eau (MPa) |
|---|---|---|---|
| A | 2,26 | 2,0 | 40 |
| B | 2,3 | 9,0 | 25 |
| C | | 7,0 | 23 |
| D | | 4,5 | 27 |
| E | | | 31 |

Les résultats les plus satisfaisants sont donc obtenus avec les ciments A, D et E selon l'invention, la composition la plus performante étant celle contenant à la fois une silice de précipitation, un silicone et une fumée de silice (ciment A).

### EXEMPLE 6

On prépare trois ciments F, G et H de la même manière que dans les exemples précédents et avec les éléments ci-dessous. Les teneurs sont données en partie en poids.
Ciment Portland : 75
Polyacrylamide (ALDRICH, référence 18127-7) : 7
Eau : 14
Silice de précipitation : 5
(surface spécifique BET donnée ci-dessous)
Fumée de silice de l'exemple 1 : 20
Silicone de l'exemple 1 : 0,5

La silice de précipitation utilisée pour la préparation du ciment F présente une surface spécifique BET de 40 m²/g.

La silice de précipitation utilisée pour la préparation du ciment G (respectivement H) présente une surface spécifique BET de 120 m²/g (respectivement 160 m²/g).

On prépare ensuite les mêmes barettes qui sont soumises au même test que précédemment.

**TABLEAU 2**

| Ciment | reprise d'eau (%) | résistance après 24h dans l'eau (MPa) |
|---|---|---|
| F | 3,5 | 32 |
| G | 1,1 | 46 |
| H | 2,5 | 40 |

## Revendications

**1/** Composition pour ciment sans macro-défauts caractérisée en ce qu'elle comprend :
- un ciment ;
- un polymère hydrosoluble ou dispersible dans l'eau ;
- au moins un élément choisi dans le groupe comprenant les silices fabriquées par voie humide, les silices de pyrogénation et les silicones.

**2/** Composition selon la revendication 1, caractérisée en ce qu'elle comprend au moins une silice du type précité et au moins un silicone.

**3/** Composition selon l'une des revendications 1 et 2, caractérisée en ce qu'elle comprend en outre au moins un additif choisi dans le groupe comprenant la fumée de silice et les retardeurs de prise.

**4/** Composition selon la revendication 3, caractérisée en ce qu'elle comprend au moins une silice du type précité, au moins un silicone et de la fumée de silice.

**5/** Composition selon l'une quelconque des revendications 1 à 4, caractérisée en ce qu'elle comprend une silice précipitée.

**6/** Composition selon l'une des revendications 1 à 5, caractérisée en ce qu'elle comprend un ciment choisi parmi les ciments du type silicate ou du type aluminate.

**7/** Composition selon l'une des revendication 1 à 6, caractérisée en ce qu'elle comprend les éléments suivants dans les proportions indiquées en parties en poids :
- ciment : 75 à 100 ;
- polymère hydrosoluble ou dispersible dans l'eau : 5 à 11 ;
- silice : 1,5 à 20 ;
- silicone : 0,1 à 5.

**8/** Procédé de préparation d'un ciment sans macro-défauts, caractérisé en ce qu'il comprend une étape dans laquelle on mélange avec de l'eau un ciment, un polymère hydrosoluble ou dispersible dans l'eau, au moins un élément choisi dans le groupe comprenant les silices fabriquées par voie humide, les silices de pyrogénation et les silicones, et, éventuellement, au moins un additif.

**9/** Procédé selon la revendication 8, caractérisé en ce qu'on utilise une silice du type précité et au moins un silicone.

**10/** Procédé selon l'une des revendications 8 et 9, caractérisé en ce qu'on utilise à titre d'additif au moins un élément choisi dans le groupe comprenant la fumée de silice et les retardeurs de prise.

**11/** Procédé selon l'une des revendications 8 à 10, caractérisé en ce qu'on utilise une silice précipitée.

**12/** Procédé selon l'une des revendications 8 à 11, caractérisé en ce qu'on utilise un ciment choisi parmi les ciments du type silicate ou du type aluminate.

**13/** Procédé de préparation d'un ciment sans macro-défauts, caractérisé en ce qu'il comprend une étape dans laquelle on mélange une composition selon l'une des revendications 1 à 7 avec de l'eau.

**14/** Procédé selon l'une des revendications 8 à 13, caractérisé en ce qu'on fait subir un pressage à chaud au mélange obtenu et ensuite éventuellement au moins un traitement thermique.

**15/** Ciment sans macro-défauts, caractérisé en ce qu'il est obtenu par le procédé selon l'une des revendications 8 à 14.

**16/** Elément de construction caractérisé en ce qu'il est à base d'un ciment selon la revendication 15.
